(19) Europäisches Patentamt / European Patent Office / Office européen des brevets

(11) **EP 1 628 291 B1**

(12) **EUROPEAN PATENT SPECIFICATION**

(45) Date of publication and mention
of the grant of the patent:
**19.11.2008   Bulletin 2008/47**

(51) Int Cl.:
***G11B 7/00*** *(2006.01)*

(21) Application number: **05107429.2**

(22) Date of filing: **12.08.2005**

(54) **Method for manufacturing optical disk media of high-to-low and low-to-high reflectance types**

Verfahren zum Herstellen von optischen Plattenmedien vom hoch-zu-niedrig und niedrig-zu-hoch Reflektionstyp

Procédé de fabrication de disque optique de type à changement de réflexion basse vers haute et haute vers basse

(84) Designated Contracting States:
**DE FR GB**

(30) Priority:   **20.08.2004   JP 2004240187**

(43) Date of publication of application:
**22.02.2006   Bulletin 2006/08**

(73) Proprietor: **NEC CORPORATION
Minato-ku,
Tokyo 108-8001 (JP)**

(72) Inventor: **Yamanaka, Yutaka
108-8001, Tokyo (JP)**

(74) Representative: **Betten & Resch
Patentanwälte
Theatinerstrasse 8
(Fünf Höfe)
80333 München (DE)**

(56) References cited:
**EP-A- 1 067 534       EP-A- 1 467 357
US-A- 5 532 032       US-A1- 2004 037 211**

• **PATENT ABSTRACTS OF JAPAN vol. 2003, no. 12, 5 December 2003 (2003-12-05) -& JP 2004 213753 A (RICOH CO LTD), 29 July 2004 (2004-07-29)**

EP 1 628 291 B1

## Description

### BACKGROUND OF THE INVENTION

#### (a) Field of the Invention

The present invention relates to a method for manufacturing optical disk media of high-to-low and low-to-high reflectance types. The present invention also relates to such optical disk media, and an optical disk drive for driving such optical disk media.

#### (b) Description of the Related Art

In general, an optical disk drive irradiates a recording surface of an optical disk medium with an optical beam spot to record/reproduce data onto/from the optical disk medium. The optical disk media on the market include ROM (read-only-memory) media and recordable media. The ROM medium is such that embossed data bit trains are formed on the recording surface during manufacture of the ROM medium, and is used as a dedicated read-only medium. The recordable medium is such that recorded pits are formed by the user on the recording tracks to thereby record desired user data. The recordable optical media may be implemented as phase change disks, which are categorized into a compact disk-recordable (CD-R), a digital versatile disc-recordable (DVD-R), a CD-rewritable (CD-RW), and a DVD-rewritable (DVD-RW).

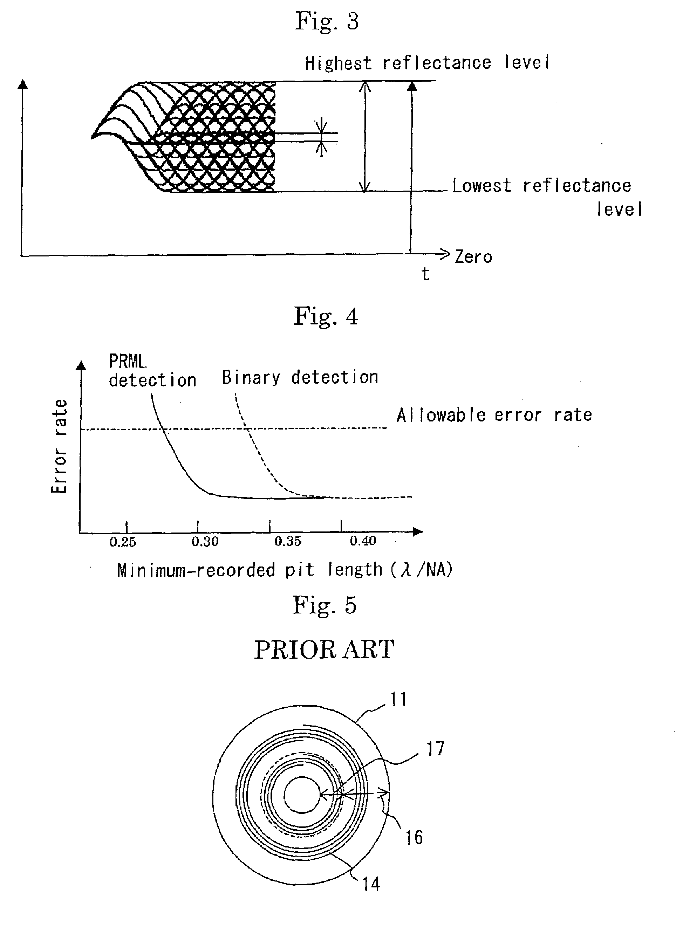

Fig. 5 shows a conventional recordable optical disk medium 11, wherein a data recording area 16 has a spiral recording track 14. The recording track 14 includes a groove for use in a tracking control, on which a plurality of organic recording films are formed. During a recording operation, a laser beam spot having a high output power is focused onto one of the organic recording films of the optical recording medium 11, transforming local areas of the recording film on the recording track to form recorded pits thereon. Some types of the optical disk medium have a system data area 17 in the vicinity of the inner periphery of the disk medium 11, the system data area 17 storing therein information of types or characteristics of the optical disk medium 11.

A DVD-R, for example, has a recording track 14 on which a recorded pit train is formed in a data format same as the data format of the DVD-ROM on which an embossed data pit train are formed. An optical disk drive can reproduce data from both the DVD-R and DVD-ROM because these disk media provide similar servo signals having a substantially same format. In other words, a dedicated read-only optical disk drive can advantageously reproduce data from the DVD-R. Some rewritable optical disk media, such as a DVD-RAM, have a land/groove data-recording format wherein both the land and groove are used for recording data thereon. This structure provides a higher data capacity for the optical disk medium.

Conventional optical disk media, such as DVD-R and DVD-RW, are generally formed as high-to-low recording media, wherein the recording of data allows the recorded local area to assume a lower reflectance than ever, i.e., the reflectance of the recorded pit is lower than the reflectance of the unrecorded area of the recording track. On the other hand, Patent Publication JP-A-2000-260061, for example, describes a low-to-high recording medium wherein a recorded pit has a higher reflectance than the unrecorded area of the recording track. This type of the optical recording media is also available in these days. The low-to-high optical recording medium may have the advantage of a higher signal-to-noise (S/N) ratio so long as the noise of the recorded pit is reduced while maintaining the initial lower reflectance of the unrecorded area at a lower level.

It is generally prescribed in the standard of the disk media that the optical recording medium have a specific reflectance range in the unrecorded area. For the case of a high-to-low optical disk medium, the optical disk drive can recognize beforehand the upper power limit of the reflected light from the recording track because the unrecorded area has a higher reflectance than the recorded pit. On the other hand, for the case of a low-to-high optical disk medium, the optical disk drive cannot recognize beforehand the upper power limit of the reflected light, because there is no recorded pit before the recording that has a higher reflectance than the unrecorded area.

The upper power limit of the reflected light is one of the most important factors in the optical disk drive for operating at a suitable signal level and at a suitable S/N ratio, without involving a signal saturation in the signal processing system. In the conventional technique, however, it is difficult for a single optical disk drive to record/reproduce data onto/from both the high-to-low optical disk medium and the low-to-high optical disk medium, due to the unknown upper power level of the reflected light in the low-to-high optical disk medium.

Document US-A-5 532 032 (cf. the preamble of claim 1) discloses an optical recording medium having a substrate and a recording film which contains coloring matter, provided on the substrate. The recording film is irradiated with a laser beam passing through the substrate so that substances of the coloring matter are aggregated with each other. The optical disk media is formed as a high-to-low disk or a low-to-high disk depending on the recording conditions. However, the document is silent as to whether or not both the disks are recorded/reproduced by using a single optical disk drive. In particular, for a high-density recording technique, the low-to-high disk which generally requires a lower recording power has a smaller difference in the reflectance between the unrecorded area and the recorded area, whereby the low-to-high disk has a poor characteristic compare to the characteristic of the high-to-low disk. This results in difficulties to reproduce data on those disk types by using a common reproducing circuit.

Documents EP-A-1 067 534 and JP-A-2004 213 753 both describe a low-to-high optical disk and the conditions for forming the recorded pits. However, they are silent as to the relationship between the low-to-high disk and the high-to-low disk.

Document US-A-2004 037 211 describes conditions for forming the recorded pit in a high-density ROM disk. However, there is no description as to the relationship between the high-to-low disk and the low-to-high disk.

SUMMARY OF THE INVENTION

In view of the above problems in the conventional technique, it is an object of the present invention to provide a system wherein a single optical disk drive can record/reproduce data onto/from both the optical disk media of high-to-low and low-to-high reflectance types.

According to the invention, this object is achieved by a system as defined in claim 1. Advantageous embodiments are defined in dependent claims.

The present description also refers to a method for manufacturing optical disk media of a high-to-low reflection type and of a low-to-high reflection type, the method including: setting a reflectance of an unrecorded area of the optical disk medium of the high-to-low reflection type within a specified reflectance range; and setting a reflectance of a possible recorded pit of the optical disk medium of the low-to-high reflection type within the specified reflectance range.

The present description also provides optical disk media manufactured by this method.

The present description also provides an optical disk drive for recording/reproducing data on optical disk media of a high-to-low reflectance type and of a low-to-high reflectance type manufactured by this method, the optical disk drive including: an optical head for irradiating recording tracks of the optical disk media to form recorded pits on both recording tracks of the optical disk media of the high-to-low reflection type and the low-reflection type, wherein: the optical head forms a recorded pit on the optical disk medium of the low-to-high reflectance type, the recorded pit having a reflectance within the specified reflectance range.

In accordance with the optical disk media, since the higher reflectance level in the unrecorded area of the high-to-low optical disk medium and the higher reflectance level in the recorded pit of the low-to-high optical disk medium are set in the common specific reflectance range, the signal level of the signal processing system of an optical disk drive can be set at a common level irrespective of the types of the optical disk media, whereby the signal processing system of the optical disk drive can record/reproduce data from both the optical disk media without the change of setting of the signal level for the signal processing system.

The above and other objects, features and advantages of the present invention will be more apparent from the following description, referring to the accompanying drawings.

BRIEF DESCRIPTION OF THE DRAWINGS

Fig. 1 is a block diagram of an optical disk drive according to an embodiment of the present invention. Fig. 2 shows the relationship between a recorded pit train and the profiles of the reflectance along the recording track, wherein (a) is a schematic top plan view of a recording track of an optical disk medium, (b) is a profile of the reflectance of the recording track assuming that the optical disk medium is of a high-to-low reflectance type, and (c) is a profile of the reflectance of the recording track assuming that the optical disk medium is of a low-to-high reflectance type.
Fig. 3 is a graph showing eye patterns of the reproduced signal.
Fig. 4 is a graph showing the relationship between the smallest recorded pit length and the error rate of the reproduced signal reproduced therefrom.
Fig. 5 is a schematic top plan view of a conventional recordable optical disk medium.

PREFERRED EMBODIMENT OF THE INVENTION

Before describing preferred embodiments of the present invention, the principle of the present invention will be described for a better understanding.

In general, a conventional optical disk medium is manufactured to have a reflectance within a specific reflectance range on the unrecorded area. In this case, the low-to-high optical disk medium does not allow the optical disk drive to know the higher reflectance level of the optical disk medium during reproduction of the data on the recording track. In an embodiment of the present invention, the process for manufacturing the optical disk media actually forms recorded pits on a low-to-high optical disk medium in a test production so that the recorded pits have a reflectance within the specific reflectance range, and thus the upper reflectance during reproduction of data from the recorded pits is set within the specific reflectance range. The data of the material, process conditions etc. in the test production are used for manufacturing the product disk media. This allows the optical disk drive to know the higher reflectance level during reproduction of data and thus achieve superior recording/reproduction.

An optical disk medium of a high-to-low reflection type according to an embodiment is manufactured to have a reflectance within a specific reflectance range on the unrecorded area, and an optical disk medium of a low-to-high reflection type according to an embodiment is manufactured to have a reflectance within the specific reflectance range on the recorded pit.

In both the optical disk media of the embodiment, the maximum value of the specific reflectance range should preferably be between double (two-fold) and triple (three-fold) of the minimum value of the specific reflectance range.

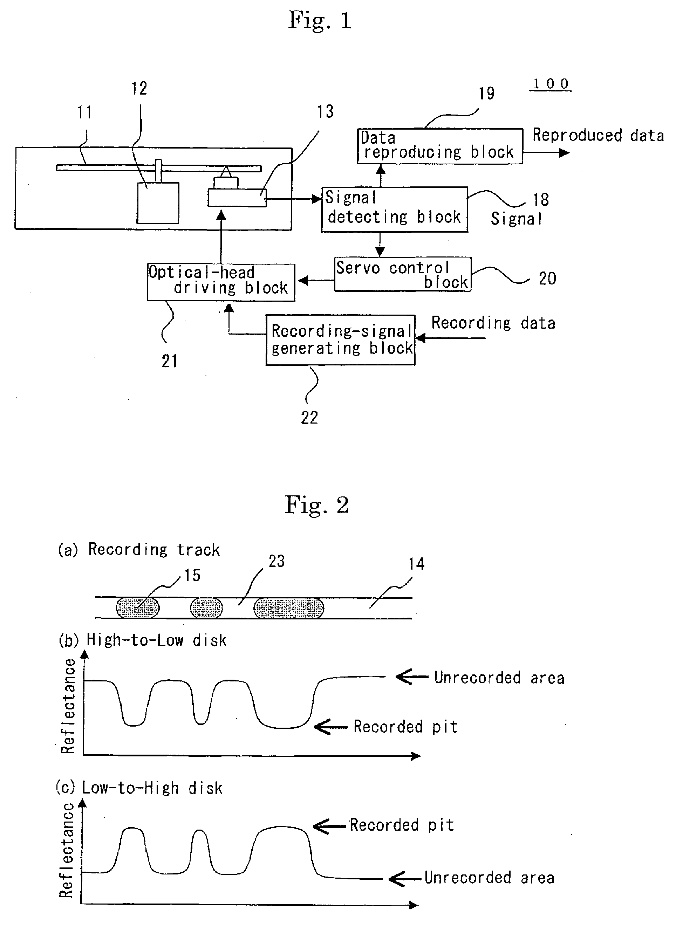

Now, the present invention is more specifically described with reference to accompanying drawings. Fig. 1 shows an optical disk drive according to an embodiment of the present invention. The optical disk drive, generally designated by numeral 100, includes a spindle motor 12, an optical head 13, and a signal processing system, which includes signal detecting block 18, a data reproducing block 19, a servo control block 20, an optical-head driving block 21, and a recording-signal generating block 22. The optical disk drive 100 records/reproduces data onto/from an optical disk medium 11.

The optical disk medium 11 is configured as a recordable optical disk of a phase change type, and may be of a high-to-low reflection type or a low-to-high reflection type. For both the cases of the optical disk medium 11 being of a high-to-low reflection type and of a low-to-high reflection type, the upper optical power of the reflected light is set within a specified range upon irradiating an optical beam spot onto the recording track.

The optical disk medium 11 is mounted on the spindle of a spindle motor 12, which rotates the optical disk medium 11. The optical head 13 irradiates an optical beam spot onto the recording surface of the optical disk medium 11, for recording/reproducing data onto/from the optical disk medium 11. The signal detecting block 18 receives a reproduced signal from the optical head 13 to detect a data signal from the recorded pits and a servo signal from the land/groove structure. The servo signal is used for detecting an error in the location of the optical beam spot with respect to a specified track of the optical disk medium 11. The data reproducing block 19 receives the data signal from the signal detecting block 18, operates for an error correction in the data signal, and reproduces the data stored on the optical disk medium 11.

The optical-head driving block 21 controls the location of the optical head 13, and the output power of the laser beam irradiated onto the optical disk medium 11. The servo control block 20 receives the servo signal from the signal detecting block 18, and controls the optical-head driving block 21 based on the servo control signal. The recording-signal generating block 22 receives recording data from outside the optical disk drive 100 to convert the received data into a recording signal having a specific format, for recording data onto the optical disk medium 11 based on the recording signal. The optical head 13 controls the laser output power based on the recording signal fed from the recording-signal generating block 22, thereby recording the data onto the optical disk medium 11.

Fig. 2 shows the relationship between a recorded pit train and the profiles of the reflectance along the recording track, wherein (a) is a schematic top plan view of a recording track 14 of an optical disk medium, (b) is a profile of the reflectance of the recording track 14 assuming that the optical disk medium is of a high-to-low reflectance type, and (c) is a profile of the reflectance of the recording track 14 assuming that the optical disk medium is of a low-to-high reflectance type. The high-to-low optical disk has a higher reflectance at the unrecorded area 23 of the recording track 14, and a lower reflectance at the recorded pit 15, as shown in Fig. 2(b). On the other hand, the low-to-high optical disk has a lower reflectance at the unrecorded area 23, and a higher reflectance at the recorded pit 15, as shown in Fig. 2(c).

Fig. 3 shows general eye patterns reproduced from different lengths of recorded pits, wherein a shorter recorded-pit provides a smaller amplitude and a longer recorded-pit provides a larger amplitude. In a practical recording condition, the reflected power from the track is not constant, as shown in Fig. 3, differently from the profiles shown in (b) and (c) of Fig. 2, among the different lengths of the recorded pits or different lengths of the unrecorded areas.

For recording/reproducing data on the optical disk medium 11 by using the optical disk drive 100, it is generally necessary to determine the characteristic of the signal detecting block 18 based on the highest reflectance of the recording track. It is assumed here that the characteristic of the signal detecting block 18 is determined based on the lowest reflectance, to the contrary. In this case, if the upper limit of the input for the signal detecting block 18 is lower compared to the highest level of the reproduced signal, the highest reflectance will cause a saturation in the signal detecting block 18 to deform the waveform of the reproduced signal and thus degrade the signal quality thereof. On the other hand, if the upper limit of the input for the signal detecting block 18 is higher compared to the highest level of the reproduced signal, a lower level of the reproduced signal may be involved with a significant noise level to thereby degrade the quality of the reproduced signal.

In manufacture of the optical disk media 11 of the present embodiment, the optical disk media 11 are fabricated so that the upper level of the eye pattern obtained from a longest recorded-pit is set to conform to the highest level of the reflectance, which is set within the specific reflectance range. Thus, in the optical disk medium of a high-to-low reflectance type, the highest level of the eye patterns shown in Fig. 3 is approximately equal to the reflectance of the unrecorded area of the recording track. Thus, in the high-to-low optical disk medium 11, the reflectance of the unrecorded area is measured in the recording track and the thus measured reflectance is set within the specific reflectance range in the process of manufacturing the optical disk media of the high-to-low reflectance type.

On the other hand, in an optical disk medium 11 of a low-to-high reflectance type, the reflectances of the suitable recorded pits should be measured after forming the suitable recorded pits on the recording track. Thus, in the low-to-high optical recording disk, a recorded pit having a length larger than the diameter of the optical beam spot focused onto the recording film is formed on the recording track, for measuring the reflectance of the thus formed recorded pit. The optical disk media of the low-to-high reflectance type are manufactured so that the measured reflectance is set within the specific reflectance range.

The absolute value of the reflectance can be calculated by measuring the signal level of the reproduced signal from a reference optical disk medium for which the reflectance is measured and by comparing a signal level of a subject optical disk medium against the measured signal level from the reference optical disk medium. The specific reflectance range within which the highest reflectance level is set may be directly determined such as between a specific lower percent and a specific higher percent. In an alternative, the specific reflectance range may be determined by specifying the ratio of the reproduced signal level to a reproduced signal level from a mirror surface, which is easy to measure for the reflectance, with the reflectance of the mirror surface being specified such as between a specific lower percent and a specific higher percent.

It may be noted here that a narrower range for the higher reflectance level of the optical disk media provides a more stabled characteristic for the signal detecting block 18. However, in consideration that the characteristics of the optical disk media vary disk by disk in fact, the maximum reflectance of the specific reflectance range should be preferably determined between two-fold and three-fold of the minimum reflectance of the specific reflectance range. In this range of the maximum reflectance level, the range of characteristic variation of the signal detecting block and the product margin of the optical disk media can be optimized with respect to one another. For example, in the case of optical disk media for use with a light source of a blue color having roughly a 405-nm wavelength, the specific reflectance range is set preferably between 5% and 15% for a rewritable optical disk, and set preferably between 10% and 30% for a write-once optical disk.

If the reflectance of a write-once optical disk, for example, is to be determined, a metallic film having a higher reflectance is formed on an organic pigment, after the organic pigment is applied onto the substrate of the optical disk. The reflectance of the unrecorded area in the optical disk can be adjusted by the thickness of the organic pigment. That is, a desired reflectance can be achieved by using a thick organic pigment providing a lower reflectance for the unrecorded area or using a thin organic pigment providing a higher reflectance.

As described above, the optical disk media for use in the present embodiment are manufactured so that the higher reflectance level of a recording track is set within a specific range irrespective of whether the optical disk media are of a high-to-low reflectance type or of a low-to-high reflectance type. Thus, the optical disk drive of the present embodiment can record/reproduce data onto the optical disk media, with the characteristic of the signal detecting block being fixed, irrespective of whether the optical disk media are of a high-to-low reflectance type or of a low-to-high reflectance type.

Fig. 4 shows a graph representing the relationship between the minimum-length recorded pit and the error rate in the reproduced data for both the case of binary detecting technique and a PRML (partial-response most-likelihood) detecting technique. In the graph, the length of the minimum-length recorded pit is normalized by the ratio of the wavelength $\lambda$ of the light source to the numerical aperture NA of the objective lens. In the reproduction of data from the CD-R or DVD-RW, the reproduced signal is subjected to a suitable waveform equalization, followed by a simple binary detection of or "0" to reproduce the recorded data. It is noted that the error rate of the reproduced data in the binary detection substantially increases below the recorded pit length roughly equal to $0.36 \times \lambda$ /NA, exceeding the allowable limit of the error rate below the recorded pit length equal to $0.34 \times \lambda$/NA, as shown in Fig. 4.

In next-generation optical disk media, the binary detection technique will be replaced by the PRML detection technique, wherein the reproduced signal is detected as multi-valued codes, which are used to calculate a reproduced series of binary data providing a maximum likelihood. In this technique, a shorter range of recorded pits, which the binary detection technique cannot detect, can be reproduced without degradation of the error rate, as shown in Fig. 4, thereby allowing a higher recording density for the optical disk media.

It should be noted, however, that the signal detecting block in the PRML system is required to reproduce the recorded pits with a higher S/N ratio, due to detection of the multi-valued codes from the reproduced signal. In the present embodiment, since the higher reflectance levels in both the high-to-low and low-to-high optical disk media are set within the specified common range, a higher S/N ratio can be achieved in both the types of the optical disk media. More specifically, correct data can be reproduced from a recorded pit having a length smaller than $0.34 \times \lambda$/NA, which causes an error rate higher than the allowable error rate in the binary detection technique.

The system data area 17 of the optical disk medium 11 shown in Fig. 5 may be used to record the type of the optical disk medium, i.e., whether the optical disk medium is of a high-to-low reflection type or a low-to-high reflection type. The optical disk drive 100 should set the servo gain etc. depending on the reflectance of the unrecorded area and the type of the optical disk media. The type of the optical disk medium recorded in the optical disk media allows the optical disk drive to identify the type before recording/reproducing data on the optical disk medium, whereby the optical disk drive can set the servo characteristic etc. based on the identified type.

The optical disk medium of the present invention can be any of the write-once type and the rewritable type. The optical disk medium may have any number of recording films on which data can be recorded and reproduced. In this case, one of the recording films may be of a high-to-low reflection type and another may be of a low-to-high reflection type.

If both the high-to-low and low-to-high optical disk media are of a ROM type and have higher reflectance levels set within the specified range, the reproduced signals reproduced from the optical disk media have a common specific amplitude range. This allows the optical disk drive to obviate setting of the input level of the signal detecting block without causing any problem in the accuracy. In other words, the setting of the higher reflectance level within the specific range may be used for a standard of the optical disk media.

Since the above embodiments are described only for examples, the present invention is not limited to the above embodiments and various modifications or alterations can be easily made therefrom by those skilled in the art within the scope of the claims.

## Claims

1. A system comprising a writable optical disk medium (11) and an optical disk drive (100) for recording/reproducing data on said writable optical disk medium (11), wherein:

   said optical disk drive (100) includes an optical head (13) for recording/reproducing data on first-type and second-type media and a signal processing system (18-22) for generating a recording/reproducing signal for said optical head (13); said first-type medium is of a high-to-low reflectance type wherein a reflectance of an unrecorded area (23) is higher than a reflectance of a recorded area (15); said second-type medium is of a low-to-high reflectance wherein a reflectance of an unrecorded area (23) is lower than a reflectance of a recorded area (15); and highest reflectance levels out of reflectances obtained by reproducing data on both said first- and second-type media are within a specific reflectance range,

   **characterized in that**:

   said optical head (13) records/reproduces data on said first-type and second-type media without changing a setting of a signal level in said signal processing system (18-22) on the condition that the following relationship holds:

   $$L < 0.34 \times \lambda/NA,$$

   wherein L, $\lambda$ and NA are the length of a minimum-length recorded pit (15) on said recording track, a wavelength of a light source and a numerical aperture of an objective lens of said optical head (13).

2. The optical disk drive according to claim 1, wherein an upper limit of said specific reflectance range is between double and triple of a lower limit of said specific reflectance range.

3. The optical disk drive according to claim 1 or 2, wherein said optical disk media (11) have information thereon for identifying said first-type media or said second-type media in an unrecorded state of said optical disk media (11).

## Patentansprüche

1. System, umfassend ein beschreibbares optisches Diskmedium (11) und ein optisches Disklaufwerk (100) zur Aufzeichnung/Wiedergabe von Daten auf/von dem beschreibbaren optischen Diskmedium (11), wobei

   das optische Disklaufwerk (100) einen optischen Kopf (13) zur Aufzeichnung/Wiedergabe von Daten auf/von einem ersten und einem zweiten Medientyp und ein Signalverarbeitungssystem (18 - 22) zum Generieren eines Aufzeichnungs-/Wiedergabe-Signals für den optischen Kopf (13) aufweist; wobei der erste Medientyp von einem hoch-zu-niedrig Reflexionsgrad-Typ ist, wobei ein Reflexionsgrad eines nicht-aufgezeichneten Gebietes (23) höher als ein Reflexionsgrad eines aufgezeichneten Gebietes (15) ist; wobei der zweite Medientyp von einem niedrig-zu-hoch Reflexionsgrad ist, wobei ein Reflexionsgrad eines nicht-aufgezeichneten Gebietes (23) niedriger als ein Reflexionsgrad eines aufgezeichneten Gebietes (15) ist; und die höchsten Reflexionsgrad-Pegel von den Reflexionsgraden, die durch die Wiedergabe von Daten vom ersten und zweiten Medientyp erhalten werden, innerhalb eines spezifischen Reflexionsgrad-Intervalls sind, **dadurch gekennzeichnet, dass**

   der optische Kopf (13) Daten auf/von dem ersten und dem zweiten Medientyp ohne Ändern einer Einstellung eines Signalpegels in dem Signalverarbeitungssystem (18 - 22) unter der Bedingung aufzeichnet/wiedergibt, dass die nachfolgende Beziehung gilt:

   $$L < 0{,}34 \times \lambda/NA,$$

   wobei L, $\lambda$ und NA die Länge eines aufgezeichneten Pits mit minimaler Länge (15) auf der Aufzeichnungsspur, eine Wellenlänge einer Lichtquelle und eine numerische Apertur einer Objektivlinse des optischen Kopfes (13) sind.

**2.** Optisches Disklaufwerk nach Anspruch 1, wobei eine obere Grenze des spezifischen Reflexionsgrad-Intervalls zwischen dem Doppelten und Dreifachen einer unteren Grenze des spezifischen Reflexionsgrad-Intervalls liegt.

**3.** Optisches Disklaufwerk nach Anspruch 1 oder 2, wobei die optischen Diskmedien (11) eine Information zum Identifizieren des ersten oder des zweiten Medientyps in einem nicht-aufgezeichneten Zustand der optischen Diskmedien (11) darauf haben.

## Revendications

**1.** Système comprenant un support de disque optique inscriptible (11) et un lecteur de disque optique (100) pour enregistrer/reproduire des données sur ledit support de disque optique inscriptible (11), dans lequel :

ledit lecteur de disque optique (100) comprend une tête optique (13) pour enregistrer/reproduire des données sur des supports de premier type et de deuxième type et un système de traitement de signal (18 à 22) pour générer un signal d'enregistrement/reproduction pour ladite tête optique (13) ; ledit support de premier type est d'un type à réflectance haute vers basse dans lequel une réflectance d'une zone non enregistrée (23) est supérieure à une réflectance d'une zone enregistrée (15) ; ledit support de deuxième type est d'un type à réflectance basse vers haute dans lequel une réflectance d'une zone non enregistrée (23) est inférieure à une réflectance d'une zone enregistrée (15) ; et les niveaux de réflectance plus élevés en dehors des réflectances obtenues en reproduisant des données sur lesdits supports à la fois de premier et deuxième types sont dans une plage de réflectance spécifique, **caractérisé en ce que** :
ladite tête optique (13) enregistre/reproduit des données sur lesdits supports de premier type et de deuxième type sans modifier un réglage d'un niveau de signal dans ledit système de traitement de signal (18 à 22) à la condition que la relation suivante soit vraie :

$$L < 0,34 \times \lambda/NA,$$

où L, $\lambda$ et NA sont la longueur d'un creux enregistré de longueur minimum (15) sur ladite piste d'enregistrement, une longueur d'onde d'une source de lumière et une ouverture numérique d'une lentille de focalisation de ladite tête optique (13).

**2.** Lecteur de disque optique selon la revendication 1, dans lequel une limite supérieure de ladite plage de réflectance spécifique est entre le double et le triple d'une limite inférieure de ladite plage de réflectance spécifique.

**3.** Lecteur de disque optique selon la revendication 1 ou 2, dans lequel lesdits supports de disque optique (11) ont sur ceux-ci des informations pour identifier lesdits supports de premier type et lesdits supports de deuxième type dans un état non enregistré desdits supports de disque optique (11).

# Fig. 1

# Fig. 2

(a) Recording track

(b) High-to-Low disk

(c) Low-to-High disk

Fig. 3

Fig. 4

Minimum-recorded pit length ($\lambda$/NA)

Fig. 5

PRIOR ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000260061 A
- US 5532032 A
- EP 1067534 A
- JP 2004213753 A
- US 2004037211 A